Europäisches Patentamt

European Patent Office

Office européen des brevets

(11) Numéro de publication: **0 076 200**
**A1**

## DEMANDE DE BREVET EUROPEEN

(21) Numéro de dépôt: 82401701.6

(22) Date de dépôt: 20.09.82

(51) Int. Cl.³: **A 23 K 1/00**
**A 23 K 1/14, A 01 G 31/00**
**A 01 G 7/04**

(30) Priorité: 24.09.81 FR 8117985

(43) Date de publication de la demande:
06.04.83 Bulletin 83/14

(84) Etats contractants désignés:
AT BE CH DE FR GB IT LI NL SE

(71) Demandeur: BIO DEVELOPMENT FRANCE, S.A.R.L.
1 rue René Démarest
F-80620 Domart en Ponthieu(FR)

(72) Inventeur: Tessier, Michel
1 rue René Démarest
F-80620 Domart en Ponthieu(FR)

(74) Mandataire: Ecrepont, Robert
Cabinet Ecrepont 12 Place Simon Vollant (Porte de Paris)
F-59800 Lille(FR)

(54) Procédé de production d'un aliment complet destiné à l'alimentation animale, aliment ainsi obtenu, et dispositif en vue de la mise en oeuvre de ce procédé.

(57) La présente invention se rapporte à un procédé de production d'un aliment complet destiné à l'alimentation animale ainsi que, d'une part, à l'aliment ainsi obtenu que, d'autre part, au dispositif pour sa mise en oeuvre.

Le procédé est caractérisé en que qu'on cultive le grain sur une aire où on dispense un champ bio-énergétique et une eau d'arrosage dans laquelle, à la fois, – on injecte tant des produits germinatifs que des produits de culture biologique et – on envoie, à travers des électrodes et un condensateur à diélectrique biologique, des émissions cosmo- telluriques que l'on capte par une antenne et des électrodes impolarisables.

Application à l'industrie des moyens de production d'aliments composés complets biologiques pour toutes les races d'animaux domestiques ou sauvages.

EP 0 076 200 A1

1

PROCEDE DE PRODUCTION D'UN ALIMENT COMPLET DESTINE A L'ALIMEN-
TATION ANIMALE, ALIMENT AINSI OBTENU ET DISPOSITIF EN VUE DE LA
MISE EN OEUVRE DE CE PROCEDE.

La présente invention se rapporte à un procédé de production d'un aliment complet, destiné à l'alimentation animale ainsi que, d'une part, à l'aliment ainsi obtenu, et, d'autre part, au dispositif en vue de la mise en oeuvre de ce procédé.

Elle concerne plus précisément un procédé de production d'une alimentation herbacé.

En ce domaine, est connu à ce jour (brevet FR-A-1.245.574) un procédé qui consiste à extraire de grains de céréales dont la germination est tout juste amorcée, une fraction liquide riche en enzymes qui la fait agir sur les tissus de la même espèce céréalière que les grains qui ont servi à l'obtention de la fraction enzymatique liquide.

Cette action enzymatique a pour effet de libérer les cellules cellulosiques qui forment le tissu de constituants nutritifs et actifs qui étaient emprisonnés.

L'ensemble de ces constituants nutritifs et actifs libérés forment un produit alimentaire qui peut être utilisé tel quel ou être incorporé à diverses préparations alimentaires dont il améliore la digestibilité en même temps qu'il les enrichit en éléments énergétiques et nutritifs.

Est également connu à ce jour (brevet FR-A-2.285.081), un procédé de valorisation des matières végétales par leur traitement avec des compositions biologiques naturelles, telles une fraction enzymatique extraite du grain en début de germination, éventuellement associées à des enzymes synthétiques.

Avec cette composition qui a un Ph acide compris entre deux et cinq et demi et qui, en poids, représente un à six pour cent du poids à sec de matières végétales traitées, le traitement s'opère à une température comprise entre quatorze et quinze degrés celsius.

Avec ce traitement réalisé en milieu aqueux, le rapport matière végétale sèche/eau, est compris entre un et demi et un seizième, la durée de traitement est de l'ordre de une à cinq heures et le produit est destiné en particulier à l'utilisation en tant qu'aliment du bétail.

Est également connu à ce jour (brevet FR-A-2.251.271) un procédé de fabrication de produits alimentaires à taux protéique élevé à partir de céréales telles que l'orge, le maïs, le riz caractérisé en ce que :

- on soumet une céréale à au moins un cycle de traitement, comprenant une trempe dans l'eau suivie d'une exposition à l'air, dans des conditions de température, de durée, d'aération et d'humidité qui sont prévues pour provoquer le début de la dégradation de l'amidon et des protéines de la céréale en sucres et en acides aminés, c'est à dire la formation d'une céréale prégermée,

- puis on ensemence la dite céréale prégermée avec un micro-organisme constitué par une levure riche en protéines du genre de celles constituées par le porulobsis-utulis ou analogue et l'on maintient le milieu dans des conditions d'humidité, de température et d'aération telles que la croissance et la multiplication de la dite levure soient favorisées au maximum.

Lorsqu'est atteint le taux désiré en protéines, cette multiplication est interrompue par une action de la chaleur.

On connaît également (brevet FR-A-2.419.977) des procédés d'attaque biochimique de la paille, par une solution de soude :

- soit, relativement concentrée, ce qui toutefois présente l'inconvénient de nécessiter, une fois atteint pour le fourrage l'état de maturité convenable, d'extraire cette solution avec beaucoup d'eau, ce qui, en pratique, entraîne également l'élimination de toutes les substances nutritives hydrosolubles, - soit, à relativement faible concentration pour éviter une extraction subséquente par lavage mais, alors, au terme de cette attaque des résidus, souvent indésirables, de solution de soude, subsistent dans la paille, ce qui peut la rendre inutilisable, par suite, notamment, de prescriptions réglementaires ou légales.

Outre le problème lié à l'élimination du produit traitant, ce procédé a l'inconvénient de se dérouler de façon extrêmement lente, et de plus, d'exiger un appareillage techniquement très élaboré, malgré lequel on ne peut pratiquement pas éviter la présence des résidus précités.

On connaît aussi (brevet FR-A-2.419.977) un procédé selon lequel on humecte la paille à l'aide d'une solution contenant au moins trois à cinq pour cent de levure et en ce que cette paille est conservée au moins jusqu'à ce qu'une odeur d'alcool soit nettement décelable, considérée à six pour mille par rapport à la masse sèche, puis en ce qu'une fois atteint l'état de maturité, on soumet la paille jusqu'alors conservée à l'état humide, à une opération de séchage.

Dans ce procédé, le solvant de la solution d'humectage peut contenir du lait ainsi qu'une matière nutritive pour la levure qui est utilisée pour la fermentation superficielle.

Sont également connus des dispositifs de culture formés de clayettes superposées et maintenues à une température constante d'environ vingt cinq degrés à l'aide d'eau éventuellement enrichie d'une solution minérale en vue de l'obtention d'un produit se présentant sous l'aspect d'un tapis de plantules composées de racines, de tiges et de feuilles.

Ce produit est destiné à augmenter la digestibilité de l'ensemble de la ration et à stimuler la vitalité des animaux qui la consomment. Tous les procédés en question sont destinés à obtenir une plantule à l'état herbacé grâce à l'augmentation du temps de germination jusqu'au stade herbacé.

C'est une culture transitoire, une culture réduite à la phase de germination, une culture embryonnaire.

Un résultat que l'invention vise à obtenir est un procédé qui permet à l'éleveur, quelles que soient les conditions climatiques et/ou géographiques dans lesquelles il se trouve, de produire un aliment complet, biologique, de façon autonome, à partir de céréales et/ou légumineuses et ce, grâce, en particulier, à une consommation d'eau réduite à son minimum.

Il est notamment caractérisé en ce qu'on sépare les grains des pailles, pour séparément leur faire subir un traitement biologique afin de créer, à partir des grains, un élément catalyseur herbacé et, à partir des pailles, un élément de base, lesquels éléments seront ensuite intimement mêlés pour donner le produit final.

Il est également caractérisé en ce que, pour obtenir l'élément herbacé, l'éleveur cultive des grains de céréales et/ou légumineuses auxquels il fait subir :

- premièrement, une phase de préculture pendant laquelle les grains sont, d'une part, aussitôt alimentés par un double produit de croissance, et, d'autre part, soumis à un champ bio-électronique, et ce, en vue de les faire germer et d'obtenir des plantules,

- deuxièmement, une phase de culture, pendant laquelle, placée sur une aire de culture bio-électronique, les plantules reçoivent un produit de croissance jusqu'à ce qu'elles atteignent un stade adulte.

Bien que, de préférence, elle se fasse sans substrat, cette culture hors sol peut néanmoins se faire avec un substrat organique tel que des pailles hachées ou toute autre matière cellulosique consommable par l'animal et pouvant ainsi compléter la partie plantule.

Ces deux phases de culture sont réalisées dans un milieu bioclimatique.

Le procédé est également caractérisé en ce que l'élément de base est, quant à lui, obtenu à partir des pailles des céréales et/ou légumineuses utilisées auxquelles on fait subir une attaque biologique à l'aide d'une solution de fermentation contenant des levures ainsi que des éléments biologiques destinés à accélérer le processus.

On voit donc que, pour la faire fermenter, on n'ajoute à la paille que des substances naturelles qu'il n'est donc pas

necessaire d'extraire par lavage mais qui, bien au contraire, améliorent la valeur nutritive pratique de la paille .

Le procédé a l'avantage de se réaliser de façon simple, rapide et d'aboutir à un produit final de grande valeur nutritive. On peut déjà, après une durée de traitement relativement brève, observer que la teneur en protéines brutes digestibles est augmentée de cinq à quinze fois.

La fermentation provoque la formation d'alcool, assurant une protection contre les bactéries étrangères.

L'alcool présent conduit à la formation d'ester, ce qui entraîne également une optimisation du coefficient de digestibilité de l'aliment final.

Pour leur mélange, l'élément de base et l'élément herbacé sont mixés ce qui donne ainsi le produit final destiné à l'alimentation de tout type d'animaux.

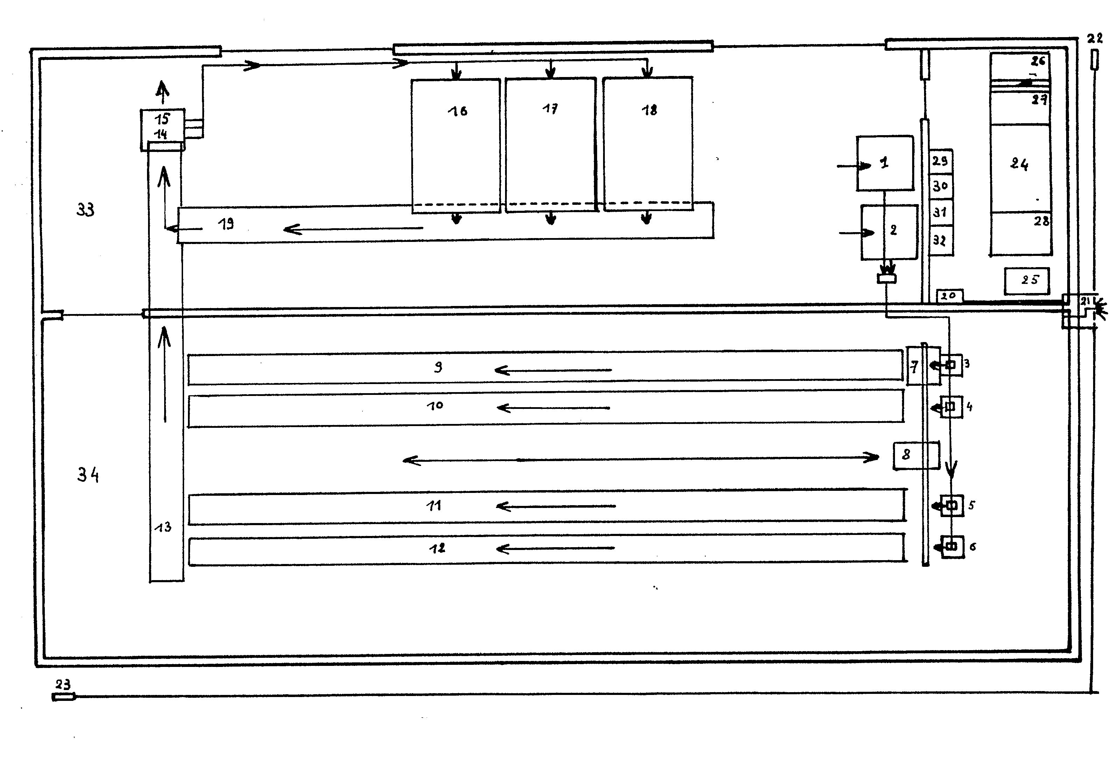

L'invention sera bien comprise à l'aide de la description ci-après faite, à titre d'exemple non limitatif, en regard du dessin ci-annexé qui représente, schématiquement, le dispositif de mise en oeuvre du procédé de production.

Ce dispositif est caractérisé en ce qu'il comporte tout d'abord, deux parties distinctes, dont une première partie qui traite les grains et une seconde partie qui traite les pailles, et ensuite un secteur où les produits issus des grains et pailles se trouvent réunis pour donner l'aliment selon l'invention.

Au départ les grains se trouvent dans les silos 1 et 2.Afin d'adapter le mélange au type d'élevage, des types de grains différents peuvent être extraits de ces deux silos 1 et 2 par deux vis doseuses les conduisant à une vis de mélange et de transport vers des sorties alimentant des préculteurs 3, 4, 5 et 6 tels des bacs de plastique permettant, chacun leur tour, un écoulement sans contrainte des grains germés dans un semoir 7.

Ce semoir 7, qui est fixé sur un chariot 8, distribue le grain automatiquement et de façon régulière sur des aires de culture 9, 10, 11 et 12, composées chacune de deux niveaux superposés donnant ainsi les huit aires de culture nécessaires pour obtenir une production journalière.

Pour conduire les plantules vers un tapis 13 chargé de leur récupération, ces aires de culture sont équipées d'un dispositif automatique composé de barres transversales associées à des chaînes passées sur des pignons recevant leur mouvement d'un motoréducteur.

Le tapis de récupération 13 conduit les plantules dans un broyeur-mélangeur 14 recevant également, pour y être mélangé, le produit issu du traitement des pailles.

Pour ce traitement, ces pailles sont amenées dans un hacheur de paille 15 puis, par les manchettes d'alimentation et un ventilateur, aux bouches d'alimentation de silos à paille 16, 17 et 18.

Après une durée de traitement déterminée, les pailles, qui sont extraites de ces silos par des moyens associés à des chaînes passées sur des pignons mus par des moto-réducteurs, sont amenées sur un tapis de récupération 19; les convoyant vers le broyeur-mélangeur 14 cité plus haut.

Le dispositif comprend en outre un système qui, tout au long du cycle d'enrichissement des grains et pailles, distribue les produits de traitement.

Ce système se compose d'une pompe qui puise de l'eau à une source indifférenciée et l'envoie dans un bac, de stockage et de mise en pression qui la transmet à une nourrice présentant deux sorties toutes deux régulées par des électrovannes.

La première sortie alimente en eau les trois silos à paille 16, 17 et 18 par un système de brumisation. A la base de ces silos, l'eau en surplus est récupérée dans les cuves pour, après ajout d'une quantité déterminée de produits de fermentation, être recyclée par une pompe .

La seconde sortie alimente en eau un ballon réchauffeur qui, après l'avoir portée à une température déterminée de préférence d'environ vingt degrés celsius, conduit cette eau à des pompes doseuses qui, en dehors des séquences de lavage, des préculteurs puis du grain, sont également et automatiquement alimentées en au moins l'un des produits de germination qu'elles puisent dans leurs bacs de stockage.

L'eau ainsi chargée des produits de germination, est pulvérisée dans les préculteurs 3, 4, 5 et 6.

Le ballon réchauffeur alimente également un ballon qui régulera la température de l'eau du circuit de distribution du produit de culture.

Dans un bac, une pompe puise une quantité déterminée de produit de culture, l'ajoute à l'eau dont, avec précision, la température a été régulée, entre dix huit et vingt cinq degrés celsius selon le type de production, avant de l'envoyer par l'intermédiaire d'une pompe de mise en pression dans les rampes de brumisation situées au dessus des aires de culture à deux niveaux 9, 10, 11 et 12.

La commande de cette brumisation est automatisée par un système à sondes électroniques mesurant les différences d'hygrométrie dans le milieu ambiant du système radiculaire de la bio-masse en culture et dans le milieu ambiant de la partie aérienne.

Outre la chaleur constante, un circuit fermé dispense, dans un système raidiculaire de la bio-masse, un champ d'énergie bio-électronique.

A cet effet, l'eau distillée traitée bio-électroniquement, que contient ce circuit et qui, sous le contrôle de vannes de régulation, est mise en mouvement par une pompe de circulation, passe par un ballon réchauffeur puis par un échangeur constitué d'un tapis radiant.

Dans une variante de réalisation, les aires de culture peuvent recevoir leur chaleur et leur champ bio-électronique par une méthode sèche, grâce à des fils à âme de cuivre, faisant office de résistances, isolés par du téflon ou une matière similaire, qui, outre la chaleur, laisse passer les champs bio-électroniques.

L'une des principales caractéristiques de l'invention est qu'elle utilise la biologie électronique dite bio-électronie.

On sait que la biologie électronique, s'étend à l'ensemble des phénomènes électriques, magnétiques, diélectriques, champs énergétiques et cybernétiques dont les organismes vivants, cellules et systèmes pluricellulaires, sont le siège sans distinction d'origine qu'il s'agisse d'expressions immédiates de l'activité cellulaire, d'effets indirects de cette activité ou même d'effets des seules propriétés structurales.

Il en est de même pour les phénomènes liés à l'oscillation cellulaire et l'énergie spatiale intercorpusculaire, ainsi que pour les phénomènes vibratoires, rythmiques, de résonnance et transmutatoires, au sein de l'organisme vivant.

C'est ainsi que le végétal est un "complexe énergétique" dont la vie est entièrement régie par des actions et interactions électroniques, tant dans son fonctionnement que dans ses besoins.

La bio-électronie est donc envisagée comme une solution globale aux actions conduites par l'homme pour obtenir une production végétale quelle qu'elle soit.

Une partie du dispositif de mise en oeuvre du procédé selon l'invention consiste en un dispositif bio-électronique 20 se composant d'un condensateur à diélectrique biologique, d'un dévolteur et d'une rampe de lampes à néon qui captent :

- une énergie électrique sur la phase du courant électrique,

- une autre, dans l'atmosphère, au moyen d'une antenne 21 et

- une troisième, dans le sol, au moyen d'électrodes impolarisables 22 et 23.

Le condensateur à diélectrique biologique transforme les énergies reçues en champs à résonnances biologiques et les transmet aux circuits de fluide par l'intermédiaire de polyélectrodes plongeant en des endroits déterminés dans les fluides.

L'ensemble est installé dans un bâtiment conçu à cet effet, se divisant en deux parties différenciées 33 et 34. Une première partie 33 est conçue de façon à contenir le matériel de traitement des pailles ainsi que le matériel de climatisation qui est indispensable pour la seconde partie 34 du bâtiment laquelle est comparable à une serre mais qui, afin d'obtenir le maximum d'efficacité du système bio-électronique, est réalisée de manière à éviter la création d'une cage de Faraday qui produirait des stress au niveau de la bio-masse.

Outre une esthétique particulièrement recherchée, sa forme permet un éclairement et une diffusion de la luminosité optimisée.

Le matériel de climatisation ou "centrale de traitement d'air" 24 se compose d'une chaudière à eau 25, à combustible indifférencié, qui alimente en eau chaude outre le ballon réchauffeur, la batterie chaude destinée au réchauffage de l'air de la climatisation.

Des gaines de soufflage d'air et de reprise d'air permettent le soufflage d'air traité dans la partie serre 34 et l'aspiration en vue de son recyclage dans le matériel de climatisation par la manchette d'air de reprise de la manchette de soufflage.En cas de nécessité, par un volet d'admission d'air, de l'air neuf peut, en outre, être adjoint à l'air recyclé.

Un conduit d'évacuation élimine les gaz brûlés à l'extérieur du bâtiment.

Après sa reprise par la manchette d'admission ou par le volet d'admission d'air neuf, l'air à recycler ou air neuf passe successivement par une batterie de filtres 26 qui en élimine la poussière, puis par une batterie chaude qui la réchauffe si nécessaire, puis par un laveur d'air 27 qui si nécessaire l'humidifie et, enfin, par une centrale de ventilation 28 qui lui donne le mouvement.

Le tout est contrôlé automatiquement par une centrale électronique munie de sondes de prise de données et par une vanne à trois voies qui régle les débits d'eau de la centrale de traitement d'air 24.

Des armoires électriques 29, 30, 31 et 32 renferment les différents matériels électriques et électroniques d'automatisation, de contrôle et de sécurité de l'ensemble de la station.

Le dispositif bio-électronique comprend des électro-aimants et/ou des aimants d'une puissance variable, par exemple de huit mille gauss, destinés à créer une magnétisation des fluides ce qui, provoquant leur agitation moléculaire fera agir plus complètement le traitement bio-électronique qui suivra immédiatement leur action.

Comme indiqué plus haut, ce traitement bio-électronique est effectué à l'aide d'un condensateur à diélectrique biologique.

Il permet d'obtenir des courants à haute fréquence à partir d'une alimentation à basse fréquence, par exemple, par le secteur. Ce phénomène est connu sous le nom de décharges silencieuses à travers des électrodes diélectriques.

Le condensateur à diélectrique biologique peut être comparé sur le plan électrique à un très mauvais condensateur donnant beaucoup de bruit.

Le diélectrique avantageusement retenu dans l'exemple ici décrit, est la cire d'abeilles, mais pourrait être constitué de tout autre corps organique tel l'huile d'olive, de colza, de tournesol, etc .. le sérum physiologique, les feuilles d'arbres imbibées d'huile, etc ..

Etant reliées - l'une à l'antenne, isolée du sol, pouvant avantageusement être en cuivre, très grande et de type parabolique, en conchoïde, et - l'autre aux deux électrodes impolarisables, par exemple, du type "compagnie générale de géophysique" ou "Schlumberger", donnant du bruit radio-électrique, aux plaques de ce condensateur apparaissent des tensions non négligeables dues à la fois au champ électromagnétique cosmique et au champ électro-magnétique terrestre.

En effet, le gradiant du champ électro-magnétique aérien, fluctue entre cent et dix mille volts par mètre, à quoi, il convient d'ajouter les ondes radio naturelles, les orages tropicaux (sur vingt sept kilohertz), les orages locaux en haute et basse fréquence et les étincelles électriques de tous ordres.

De plus, le retour étant capacitif par le support, par le secteur, le dit condensateur est soumis à la tension entre phase et terre.

Le système peut être amélioré au point de vue vitesse de charge par l'adjonction d'un montage électronique fournissant plus d'harmoniques que le secteur sinusoïdal accompagnés de bruits divers.

En sortie du condensateur, un fil en cuivre tressé est relié à une électrode et/ou polyélectrode plongée dans les fluides à traiter.

Le ou les composants de cette électrode et/ou polyélectrode peuvent comporter un ou plusieurs métaux, métalloïdes ou minéraux dans toutes leurs gammes existantes sous réserves de répondre à plusieurs paramètres (type de fluide à traiter, destination de ces fludes, etc ...).

On peut avantageusement coupler au condensateur un appareillage permettant d'amplifier de façon importante les phénomènes bio-électroniques produits par le dispositif sus-décrit,tel un appareillage permettant la création de champs énergétiques par amplification de ce que l'on nomme les émissions dûes aux formes.

En effet, on sait que certaines formes géométriques (par exemple la pyramide) sont, lorsqu'elles présentent des proportions appropriées, le siège d'émissions dont, jusqu'à présent, on n'a pas pu déterminer la nature exacte mais dont on a constaté les effets particuliers qu'elles avaient sur les organismes vivants. A cet effet, le dispositif selon l'invention comporte essentiellement une forme géométrique présentant un minimum de symétrie dans un plan ou dans l'espace.

A titre d'exemple, on peut citer comme forme celle d'une série d'amplificateurs dits de BELISAL, ou un amplificateur accumulateur de type Albert MASSON.

Une autre caractéristique essentielle de la présente invention repose sur la spécificité des produits de culture biologique employés.

En ce qui concerne la préculture de la partie enrichissant ces grains, les produits ont été établis de la façon suivante.

On savait que l'enveloppe externe des grains était constituée par plusieurs membranes superposées (glumelle, péricarpe et testa), semi-perméables, interdisant donc le passage des matières macro-moléculaires et, en particulier, des protéines enzymatiques mais on a constaté qu'en traitant extérieurement cette enveloppe avec un mélange approprié d'enzymes, il était possible de la rendre perméable aux enzymes contenues dans le bain de traitement. Ces enzymes se diffusent ensuite dans l'endosperme où, conjugant leur action avec les enzymes synthétisées par les cellules à aleurone, elles déterminent dans tout le grain la désagrégation rapide et homogène des matières intersticielles et des cellules d'amidon.

Les enzymes capables de rendre ainsi les membranes de l'enveloppe externe perméables aux enzymes comprennent, en particulier, l'hémicellulase, la bétaglucanase, utilisées soit seules, soit en mélange avec la cellulase, la pectinase, la xylanase, la protéase et/ou pectinase, l'apha-amylase.

Selon l'invention, on fait avantageusement suivre le traitement avec le mélange d'enzymes décrit précédemment par un traitement à l'acide gibbérellique. Celui-ci, du fait de la perméabilité des couches externes du grain, peut s'infiltrer rapidement jusqu'aux cellules à aleurones en provoquant une formation rapide et générale des enzymes synthétisées par ces cellules.

Le mélange d'enzymes utilisé dans le traitement préalable des grains, peut être préparé à partir d'enzymes pures, mais il est particulièrement avantageux d'utiliser dans ce but, des mélanges d'enzymes, d'origine fongique ou bactérienne, obtenus directement et sans préparation préalable des enzymes, que ces mélanges soient utilisés directement lorsqu'ils comprennent toutes les enzymes nécessaires en quantités appropriées ou après addition de certaines enzymes absentes ou présentes en quantités insuffisantes.

- hémicellulase
- cellulase
- pectinase
- beta-glucanase
- xylanase
- protéase acide
- pectine-estérase

Les proportions de ces enzymes sont en fonction du type de culture envisagé.

Il a également été établi que, afin que la pénétration des enzymes dans le grain puis leur diffusion dans l'endosperme soient d'autant plus élevées, le traitement par la solution d'enzymes devait être précédé par un trempage dans l'eau pure.

En ce qui concerne les produits de culture, le milieu de culture se compose de plantes cellulaires, algues, hépatites, mousses, qui font elles-même la synthèse consistant à transformer les sels minéraux dont elles se nourissent en combinaison organique dont les végétaux vont se nourrir.

A titre d'exemple, on peut utiliser des algues vertes mélangées de la famille des chlorophycées et/ou cyanophycées, hépatiques du type riccia flutans, des mousses du type brachytérium rivularé, les cyanophytes ayant la propriété de fixer l'azote qui sera ainsi transmis à la plante.

Les chlorophycées auront un effet protecteur en détruisant les protozoaires et les champignons pathogènes des plantes.

Les hépatiques et mousses liées aux algues permettront de créer et de stimuler les phénomènes transmutatoires qui engendrent à partir des éléments fournis à un être vivant, d'autres éléments qui lui sont nécessaires.

A titre d'exemple, le composé minéral destiné aux plantes cellulaires pourra avantageusement être le suivant :

- Nitrate de Calcium : 68 %
- Sulfate de magnésium : 35 %
- Acide éthylène-diamino-tétracétique : 1,2 %
- Sulfate de manganèse : 0,4 %
- Acide borique : 0,4 %
- Sulfade de cuivre : 0,017 %
- Amonium molybdate : 0,005 %
- Acide phosphorique : traces
- Oligo-éléments : bore, manganèse, zinc, cuivre, sel de sodium
                   vanadium, molybdène, alumine.

La concentration totale de la solution nutritive doit avoir une valeur osmotique convenable comprise entre une demie et deux atmosphères en effet, au dessous, elle serait trop peu nutritive, au dessus, elle créerait une force osmotique qui diminuerait ou arrêterait la croissance.

En ce qui concerne le produit de fermentation biologique des pailles, à titre d'exemple, le dit produit se composera d'une levure (cinquante pour cent), de ferments lactiques (neuf pour cent), de sucres organiques (quarante pour cent) et d'un agent de catalyse et de stimulation du milieu de fermentation (un pour cent), lequel se compose d'essences et d'extraits végétaux. Le produit de résonnance bio-élecronique contenu dans le circuit fermé des aires de culture se compose d'eau distillée à laquelle il peut être avantageusement adjoint du sérum physiologique.

REVENDICATIONS

1. Procédé de production d'un aliment complet à partir de grains et des pailles de ceux-ci, CARACTERISE en ce qu'on sépare et prépare, indépendamment l'un de l'autre, un élément herbacé, obtenu par la germination et la culture des grains et un élément de base obtenu par le traitement des pailles, en ce qu'ensuite, pour créer un phénomène de synergie et de complémentarité, on mélange intimement ces deux éléments et en ce que :

a) pour la préparation de l'élément herbacé, sous un double périodisme température/hygrométrie et diurne/nocturne, on cultive le grain sur une aire où on dispense un champ bio-énergétique et une eau d'arrosage dans laquelle, à la fois, on injecte tant des produits germinatifs que des produits de culture biologique et on envoie, à travers des électrodes et un condensateur à diélectrique biologique, des émissions cosmo-telluriques que l'on capte par une antenne et des électrodes impolarisables,

b) pour la préparation de l'élément de base, on fait fermenter la paille à l'aide d'un produit biologique que l'on distribue par l'intermédiaire d'une eau que l'on magnétise et traite, comme pour les grains, par des émissions cosmo-telluriques.

2. Procédé selon la caractéristique 1 caractérisé en ce que, alors que pendant le traitement préalable des grains, on les traite avec des produits germinatifs consistant en un mélange d'enzymes, ensuite on utilise de l'acide gibbéréllique.

3. Procédé selon la revendication 2 caractérisé en ce que les enzymes du mélange, qu'elles soient fongiques ou bactériennes, sont obtenues directement et sans purification préalable et comprennent, que ce soit d'origine ou par addition, au moins certaines des enzymes suivantes :

- hémicellulase
- cellulase
- pectinase
- béta-glucanase
- xylanase

- protéase-acide

- pectine-estérase.

4. Procédé selon la revendication 2 ou 3 caractérisé en ce que le traitement par la solution d'enzymes est précédé par un trempage à l'eau pure.

5. Procédé selon l'une quelconque des revendications 1 à 4 caractérisé en ce que le produit de culture utilisé consiste en un milieu nutritif qui se compose de plantes cellulaires, algues, hépatiques, mousses, alimentées par un composé minéral.

6. Procédé selon la revendication 5 caractérisé en ce que le composé minéral est représenté par la formule suivante :

- nitrate de calcium : 8 %
- sulfate de magnésium : 35 %
- nitrate de potassium : 19 %
- phosphate de potassium : 6 %
- acide éthylène-diamino-tétracétique : 1,2 %
- sulfate de manganèse : 0,4 %
- acide borique : 0,4 %
- sulfate de cuivre : 0,01 %
- amonium molybdate 0,005 %
- acide phosphorique : traces
- oligo-éléments : bore, manganèse, molybdène, zinc, cuivre, sel de sodium, vanadium, alumine.

7. Procédé selon l'une quelconque des revendications 1 à 6 caractérisé en ce que, pour la fermentation des pailles, on utilise un produit composé de cinquante pour cent de levure, neuf pour cent de ferments lactiques, quarante pour cent de sucres organiques et d'un agent de catalyse et de stimulation de milieu de fermentation dans la proportion de un pour cent, lequel se compose d'essences et d'extraits végétaux,

8. Procédé selon l'une quelconque des revendications 1 à 7, caractérisé en ce que le fluide des aires de culture, contient de l'eau distillée.

9. Procédé selon la revendication 8 caractérisé en ce que l'eau distillée est additionnée de sérum physiologique.

10. Procédé selon l'une quelconque des revendications 1 à 9 caractérisé en ce que, pour la croissance de l'élément herbacé, on le place dans un milieu maintenu à une température nocturne de douze degrés celsius et diurne de trente huit degrés celsius et à une hygrométrie relative d'au moins trente cinq pour cent.

11. Procédé selon la revendication 10 caractérisé en ce qu'on effectue la culture dans un milieu maintenu à une température nocturne de seize degrés et diurne de vingt quatre degrés pour une hygrométrie relative nocturne de soixante pour cent et diurne d'au moins quatre vingt pour cent.

12. Procédé selon l'une quelconque des revendications 1 à 11 caractérisé en ce qu'on effectue la culture sous une enceinte bio-climatique.

13. Procédé selon l'une quelconque des revendications 1 à 12 caractérisé en ce qu'on effectue la culture hors sol.

14. Procédé selon l'une quelconque des revendications 1 à 13 caractérisé en ce que l'on enrichit les grains pendant une période de temps comprise entre trois et quinze jours inclus.

15. Procédé selon l'une quelconque des revendications 1 à 14 caractérisé en ce que l'on enrichit les pailles pendant une période de temps comprise entre deux et quatre jours inclus.

16. Procédé de préparation de l'aliment selon l'une quelconque des revendications 1 à 15 caractérisé en ce que l'enrichissement des grains s'opère en deux phases dont une phase de préculture et une phase de culture.

17. Procédé selon l'une quelconque des revendications 1 à 16 caractérisé en ce que l'enrichissement du grain est effectué en production hors sol sans aucun substrat.

18. Procédé selon l'une quelconque des revendications 1 à 17 caractérisé en ce que l'enrichissement du grain est effectué en production hors sol avec un substrat organique en matière consommable par l'animal et complétant la partie plantule.

19. Procédé selon l'une quelconque des revendications 1 à 18 caractérisé en ce qu'à l'action du condensateur on combine celle d'un appareillage d'émissions dues aux formes.

20. Aliment complet destiné à l'alimentation animal caractérisé en ce qu'il est obtenu à l'aide du procédé selon l'une quelconque des revendications 1 à 19.

21. Dispositif de mise en oeuvre du procédé selon l'une quelconque des revendications 1 à 19 caractérisé en qu'il comprend des moyens séparés de préparation de l'élément herbacé et de l'élément de base ainsi que des moyens pour, au terme de leur préparation séparée, les mélanger intimement et en ce que lesdits moyens séparés comprennent :

- ceux pour l'élément herbacé,une aire de dépôt des grains qui, outre à des moyens d'action sous un double périodisme temps/hygrométrie et nocturne/diurne, est combinée - tant à des moyens dispensant, les uns, un champ bio-énergétiques et, les autres, une eau d'arrosage - qu'à une antenne et à des électrodes impolarisables reliées à un condensateur, à diélectrique biologique, lui-même relié à des électrodes injectant dans l'eau d'arrosage les émissions cosmo-telluriques captées par les susdites antenne et électrodes impolarisables

- ceux pour l'élément de base, des moyens de fermentation de la paille à l'aide d'un produit biologique, combinés avec des moyens - tant de distribution de ce produit et d'une eau que de magnétisation que de traitement de cette eau, comme ci-dessus, par les émissions cosmo-telluriques.

22. Dispositif selon la revendication 21 caractérisé en ce que les électrodes impolarisables sont de l'un des types dit "Compagnie Générale de Géophysique" et "Schlumberger".

23. Dispositif selon la revendication 21 ou 22 caractérisé en ce que l'antenne est de type parabolique et conchoïde, en cuivre, isolée du sol.

24. Dispositif selon l'une quelconque des revendications 21 à 23 caractérisé en ce que le diélectrique biologique du condensateur consiste en un corps organique.

25. Dispositif selon la revendication 24 caractérisé en ce que le corps organique consiste en de la cire d'abeilles.

26. Dispositif selon l'une quelconque des revendications 21 à 25 caractérisé en ce que le condensateur à diélectrique biologique est couplé à un appareillage de création de champs énergétiques par amplification des émissions dues aux formes.

27. Dispositif selon l'une quelconque des revendications 21 à 26 caractérisé en ce que l'aire de culture consiste en un tapis radiant comprenant un circuit dans lequel passe un

5

**0076200**

fluide dispensant dans la bio-masse une chaleur constante et un champ bio-énergétique.

28. Dispositif selon l'une quelconque des revendications 21 à 27 caractérisé en ce que, pour transmettre à la bio-masse la chaleur et les champs d'énergie, il comprend des fils à âme de cuivre isolés.

29. Dispositif selon l'une quelconque des revendications 21 à 28 caractérisé en ce que, pour la magnétisation des divers fluides utilisés, il comprend des polyélectrodes.

1/1    0076200

Office européen
des brevets

**0076200**
Numéro de la demande

**RAPPORT DE RECHERCHE EUROPEENNE**

EP 82 40 1701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | A 23 K 1/00 |
| A | FR-A-2 451 707 (M.P.TESSIER) *En entier* | 1-29 | A 23 K 1/14 |
| | | | A 01 G 31/00 |
| | --- | | A 01 G 7/04 |
| A | FR-A-2 433 901 (ETABLISSEMENT DE GESTION INDUSTRIELLE) *En entier, en particulier page 17, lignes 23-24* | 1-29 | |
| | --- | | |
| A | FR-A-2 105 501 (L'ALIMENTATION ZOOTECHNIQUE) | | |
| | --- | | |
| A | DE-C- 679 521 (W.SEIBOLD) | | |
| | --- | | |
| A,D | FR-A-1 245 574 (E.M.J.BLANCHON) | | DOMAINES TECHNIQUES RECHERCHES (Int. Cl. ³) |
| | --- | | |
| A,D | FR-A-2 285 081 (FINANDAL S.A.) | | A 23 K |
| | | | A 01 G |
| | --- | | |
| A,D | FR-A-2 251 271 (NORDON & CIE.) | | |
| | --- | | |
| A,D | FR-A-2 419 977 (R.NEUMAIER) | | |
| | ----- | | |

Le présent rapport de recherche a été établi pour toutes les revendications

| Lieu de la recherche | Date d'achèvement de la recherche | Examinateur |
|---|---|---|
| LA HAYE | 14-12-1982 | GALLIGANI L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82